# EUROPEAN PATENT SPECIFICATION

(11) **EP 1 454 035 B1**
(45) Date of publication and mention of the grant of the patent: **05.11.2008**
(21) Application number: 02788095.4
(22) Date of filing: 12.12.2002
(51) Int. Cl.: C09K 8/62, C09K 8/04

(54) **FRICTION REDUCING COMPOSITION AND METHOD**
REIBUNGSREDUZIERENDE ZUSAMMENSETZUNG UND VERFAHREN
PROCEDE ET COMPOSITION DE REDUCTION DU FROTTEMENT

(30) Priority: 12.12.2001 US 339630 P; 27.08.2002 US 228875
(43) Date of publication of application: 08.09.2004
(60) Divisional application: 06118911.4
(73) Proprietor: Clearwater International, L.L.C, Houston, Texas 77027 (US)
(72) Inventor: SCHWARTZ, Kevin M., Mt. Lebanon, PA 15228 (US); SMITH, Kevin, W., McMurray, PA 15317 (US); CHEN, Shih-Ruey, T., Pittsburgh, PA 15237 (US)
(74) Representative: Brewer, Michael Robert
(86) International application number: PCT/GB2002/005638
(87) International publication number: WO 2003/050387

(56) References cited:
- CA-A- 2 257 699
- US-A- 4 604 217
- US-A- 5 846 308
- US-A- 5 965 502
- US-A- 6 103 153
- US-B1- 6 315 824

## Description

This invention relates to polymeric gel systems and their use in hydrocarbon recovery, as well as to gel plugs and pigs for pipeline use.

Micellar combinations of cationic or anionic polymers and oppositely charged surfactants are made preferably with C6-23 alcohols in proportions coordinated in aqueous media with the aid of Zeta Potential measurements. The resulting gels are useful in drilling and formation fracturing in hydrocarbon recovery, manifesting excellent proppant suspending properties in low concentrations of polymer and surfactant as compared to the prior art.

In particular, this application is directed to the use of such gels in pipeline cleaning and related processes in pipeline operation. The gels are useful in making gel plugs and pigs used for the separation of fluids in pipelines for various purposes.

In US Patent 5,169,441, Lauzon suggests the use of Zeta Potential for characterizing particulates such as pigments treated with cationic polymers. Lauzon's US Patent 5,846,308 describes the stabilization of a rosin dispersion for use as a sizing composition by treating it with a "cationic colloidal coacervate" which may include both a cationic polymer and an anionic surfactant; the finished sizing composition is to have a Zeta Potential of at least 20 millivolts. Poly(diallyldimethyl ammonium chloride), sometimes known as polyDADMAC, is the preferred cationic polymer. Also, Lauzon's US Patent 6,315,824 describes a similar coacervate stabilizing system used for hydrophobic non-rosin sizing agents, which may be liquid as well as solid. See also Lauzon's US Patent 4,507,210, which suggests a correlation of Zeta Potential to certain filtration properties in the treatment of shale and clay in hydrocarbon recovery; see also Engelmann et al in US Patent 5,196,401.

Other compositions comprising a cationic polymer and an anionic surfactant, often in high ratios of anionic surfactant to cationic polymer, may be found in Matz and LeMar US Patent 6,110,451, Verdicchio and Spilatro US Patent 4,948,576, and the shampoo and other personal care products described by Guskey et al in US Patent 6,297,203 and 6,221,817, Sako et al in US Patent 6,284,230, (which also describes betaines) Hoshowski et al in US Patent 5,137,715, and Snyder et al in US Patent 6,248,317.

Combinations of cationic polymers, betaines, and anionic surfactants may be inferred from the numerous combinations of materials that are possibly viscoelastic within the disclosure of Balzer in US Patent 5,956,502, dealing with compositions for use on the hair and skin. See also the combination of cationic polymer with anionic surfactants for use as an automatic dishwashing detergent, in Tartakovsky et al US Patent 6,281,180.

In the field of hydrocarbon recovery from the earth, formation fracturing fluids proposed by Zhang in Canadian patent 2,257,699 combine anionic surfactants such as sodium xylene sulfonate and cationic surfactants such as N, N, N, trimethyl-1-octadecammonium chloride to make a gel said to be viscoelastic. Carbon dioxide is added to similar combinations in Zhang's Canadian patent 2,257,697 to generate a foam. Borchardt et al, in US Patent 4,409,110, describe formation flooding compositions which may comprise cationic polymers and anionic surfactants. Numerous combinations of surfactants and other compounds are proposed by Dahayanake et al in US Patent 6,258,859 (WO 98/56497; PCT/US/12067). See also the compositions said to be viscoelastic and proposed for well treatment by Hughes et al in US Patent 6,232,274 and Jones et al in US Patent 6,194,356.

Also in the art of producing oil and gas from underground formations, it is known to add friction reducing compositions to the fracturing fluids, to conserve energy. As summarized in Persinski et al US Patent 3,768,565, "it is necessary to inject sufficient amounts of fracturing fluids ... in order to effectuate cracks or fractures in the subterranean formation. Pressures as high as 3000 to 10000 psi (20.7 to 68.9 MPa) measured at the surface are often required. Because of the large quantities of fluid needed, the high velocities required, and the general irregularities of the formation, it is difficult to obtain satisfactory results in many fracturing operations because of the energy loss." Column 1, lines 44-55. See also column 1, lines 14-32: "It is well known that in the movement of aqueous fluids through conduits, friction is encountered and hence energy is lost. This energy loss is apparent from the pressure drop obtained in moving the fluid through a given distance and is directly proportional to the velocity of the fluid. According to the well-known laws of fluid dynamics, as long as the critical Reynolds Number of a fluid medium flowing through a conduit is not exceeded, the fluid moves in laminae which are actually aligned along the conduit. Under these conditions of laminar flow, the energy loss is minimal. However, when the velocity is greatly increased, the critical Reynolds Number is exceeded and turbulence occurs. This turbulence represents the change from laminar to nonlaminar flow. In addition, turbulence is increased by any irregularities in the conduit or in the entering or exiting formation which will distort the flow pattern. An increase in turbulence causes an increase in the amount of energy lost through friction." Since these summaries were written in 1971, oil and gas production conditions and demands have further heightened the requirements for friction reducing additives for fracturing fluids. Various water-soluble polymers are suggested for friction reducing in the *Persinski patent as well as several others cited in it*. The reader may also be interested in the polymers used by Boothe et al in US Patent 3,868,328, Martin et al US Patent 3,943,060, Gayley et al US Patent 3,562,226, McClaflin et al US Patent 3,730,275, Griffin US Patent 4,153,066, McDonald et al US Patent 4,182,417, Teot et al US Patent 4,615,825, Karl US Patent 4,637,418, and Seheult et al US Patent 4,717,488.

Many of the materials used in the past for friction reduction require economically unattractive concentrations. Others are unattractive for various purposes because of their chemical reactivity. There remains a need for friction reducing materials which may be used at lower concentrations. Combinations of cationic polymers, betaines, and anionic surfactants may be inferred from the numerous combinations of materials that are possibly viscoelastic within the disclosure of Balzer in US Patent 5,956,502, dealing with compositions for use on the hair and skin. See also the combination of cationic polymer with anionic surfactants for use as an automatic dishwashing detergent, in Tartakovsky et al US Patent 6,281,180.

Mechanical devices known as pigs have been used to separate moving fluids in pipes. See, for example, Ross's US Patent 6,332,930. Byrd et al, in US Patent 4,767,603, describes the use of pigs: "In a fluid conducting system, articles referred to as 'pigs' are used to separate fluids moving through the system. For example, in a continuous polymer reactor system... pigs are used to separate different volumes of polymers that are moved through the tubing ... en route to being injected into a well during a tertiary hydrocarbon recovery operation.... The general purpose of a pig used in a fluid conducting system is to provide a movable fluid-sealing barrier between the fluids." Column 1, lines 13-31. Pigs and plugs made of various gels are disclosed in the following US patents, as examples: Onan et al 5,346 011 and 5,483,986, Purinton 4,537,700, 4,543,131 and 4,473,408, Bradley 6,076,278, Himes 5,346,339, and Broussard et al 4,252,456. Specific uses include pipeline cleaning, pipeline drying, separation of cementing compositions in well treatment, and others.

According to a first aspect of the present invention, there is provided an aqueous gel comprising water and, by weight based on the water, (a) 0.1% to 5% of an anionic or cationic polymer, (b) a lesser amount but at least 0.01% of a surfactant having from 8 to 22 carbon atoms and a charge opposite that of said polymer, (c) up to 5% of an amphoteric surfactant, and (d) up to 5% of an amine oxide, said gel being characterized by comprising (e) from 0.001 to 5% of a hydrophobic alcohol, and also characterized by having a Zeta Potential of an absolute value of at least 20 millivolts.

The polymer may be an anionic polymer comprising at least 20% mer units derived from 2-acrylamido-2-methylpropane sulfonic acid.

The amphoteric surfactant may comprise a betaine or sultaine gel promoter and may be present in an amount from 0.001% to 2% by weight.

The amphoteric surfactant may comprise cocamidopropyl betaine and may be present in an amount from 0.001 % to 2% by weight.

The amine oxide may comprise lauryl amine oxide and may be present in an amount from 0.001 % to 2% by weight.

The alkyl alcohol may be a linear monohydric alcohol having from 8-15 carbon atoms.

According to a second aspect of the present invention, there is provided a subterranean fracturing fluid comprising an aqueous gel according to the first aspect of the present invention and a propping agent, where the polymer is a cationic polymer and the hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, said gel including at least one of (a) 0.001% to 5% amine oxide and (b) 0.001% amphoteric surfactant.

According to a third aspect of the present invention, there is provided a subterranean drilling fluid comprising an aqueous gel according to the first aspect of the present invention and a foam generating gas, where the polymer is a cationic polymer and the hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, said gel including at least one of (a) 0.001% to 5% amine oxide and (b) 0.001% amphoteric surfactant.

According to a fourth aspect of the present invention, there is provided a subterranean formation treatment fluid comprising an aqueous gel according to the first aspect of the present invention and a gel breaker, where the polymer is a cationic polymer and the hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, said gel including at least one of (a) 0.001% to 5% amine oxide and (b) 0.001% amphoteric surfactant.

According to a fifth aspect of the present invention, there is provided method of making an aqueous gel comprising adding to water 0.1% to 5%, by weight based on the water, cationic polymer and a lesser amount but at least 0.01% by weight of an anionic surfactant having from 8 to 22 carbon atoms, optionally in the presence of at least one of (a) up to 5% by weight amphoteric surfactant and (b) up to 5% by weight amine oxide, characterized in that the adding step is carried out in the presence of 0.001% to 5% linear or branched alkyl alcohol of the general formula C_{M}H_{2M+2-N}(OH)_{N}, where M is a number from 6-23, and N is 1 when M is 6-12, but where M is 13-23, N may be a number from 1 to 3, and also characterized in that the ratio of said cationic polymer to said anionic surfactant is effective to provide a Zeta Potential having an absolute value of at least 20 millivolts.

The anionic surfactant may comprise sodium lauryl sulfonate.

According to a sixth aspect of the present invention, there is provided an aqueous composition useful for conserving energy in the transportation of aqueous fluids through pipes comprising a gel according to the first aspect of the present invention and, by weight based on water in the composition, at least 0.0001% water soluble nonionic friction reducer.

The water soluble nonionic friction reducer may be polyethylene oxide.

The polyethylene oxide may have a molecular weight of at least 10,000.

The water soluble nonionic friction reducer may be a polyalkylene glycol having a molecular weight of at least 1000.

The anionic surfactant may comprise sodium lauryl sulfonate.

According to a seventh aspect of the present invention, there is provided a method of conserving energy in the transportation of aqueous fluid through a pipe comprising adding to said aqueous fluid a small amount of a composition according to the sixth aspect of the present invention, where the anionic or cationic polymer (a) is a cationic polymer and the hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3.

The pipe may be in a well and said aqueous fluid may be a fracturing fluid.

The fracturing fluid may include a proppant.

According to an eighth aspect of the present invention, there is provided method of separating two portions of fluid for movement in a pipe comprising placing between said portions of fluid in said pipe an aqueous gel separating pig according to the first aspect of the present invention.

The method may include forming an isolated segment of at least one of said portions of fluid by placing an additional aqueous gel pig in said pipe a desired distance from said separating pig, said additional aqueous gel pig comprising water and, by weight based on the water, (a) 0.1% to 5% of an anionic or cationic polymer, (b) a lesser amount but at least 0.01 % of a surfactant having from 8 to 22 carbon atoms and a charge opposite that of said polymer, (c) from 0.001 to 5% of a hydrophobic alcohol, (d) up to 5% of an amphoteric surfactant, and (e) up to 5% of an amine oxide, said gel having a Zeta Potential of an absolute value of at least 20 millivolts.

At least one of the portions of fluid may be a cleaning fluid.

At least one of the portions of fluid may be a drying fluid.

At least one of the portions of fluid may be a well cementing fluid.

At least one of the portions of fluid may be a hydrocarbon fluid.

One of the portions of fluid may be a gas and the other of the portions of fluid may be a liquid.

The method may further include moving the portions of fluid through said pipe.

The polymer may be a cationic polymer and the hydrophobic alcohol may be a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, said gel including at least one of (a) 0.001% to 5% amine oxide and (b) 0.001 % amphoteric surfactant.

The amine oxide may comprise lauryl amine oxide and may be present in an amount from 0.001% to 2%.

The method may further include moving the isolated segment of fluid through the pipe.

Priority for this invention is claimed from US provisional application 60/339,630 filed December 12, 2001 entitled "Cationic Polymeric Coacervates". Our invention includes aqueous gels, gel-forming compositions, methods of making them, and their use in well treatment. This application is also related to US application 10/228,875 filed August 27, 2002 which describes a polymeric gel system.

In its most basic form, our novel composition comprises (a) a cationic or anionic polymer and (b) a lesser amount of an oppositely charged surfactant, in a ratio to provide a Zeta Potential of 20 millivolts or higher, or -20 millivolts or lower, and (c) a small amount of a hydrophobic alcohol having 6 to 23 carbon atoms. The composition will preferably also include a small amount of a gel promoter comprising one or more of (d) an amphoteric surfactant and/or (e) an amine oxide surfactant, while maintaining the same limits of Zeta Potential. We may call our composition a polymer coacervate because the viscosifying properties of the polymer are controlled in coacervate form - that is, the long chain cationic or anionic polymer and the smaller amount of oppositely charged surfactant act in the presence of the hydrophobic alcohol to form a singular phase distinguished by a characteristic Zeta Potential. This singular phase, under the prescribed Zeta Potential, is capable of imparting a significantly increased viscosity compared to other solutions of the same polymer at the same concentration, including such concentrations in the presence of higher and lower amounts of the same other additives or components.

The surfactant which is oppositely charged from the polymer is sometimes called herein the "counterionic surfactant." By this we mean a surfactant having a charge opposite that of the polymer.

Suitable cationic polymers include polyamines, quaternary derivatives of cellulose ethers, quaternary derivatives of guar, homopolymers and copolymers of at least 20 mole percent dimethyl diallyl ammonium chloride (DMDAAC), homopolymers and copolymers of methacrylamidopropyl trimethyl ammonium chloride (MAPTAC), homopolymers and copolymers of acrylamidopropyl trimethyl ammonium chloride (APTAC), homopolymers and copolymers of methacryloyloxyethyl trimethyl ammonium chloride (METAC), homopolymers and copolymers of acryloyloxyethyl trimethyl ammonium chloride (AETAC), homopolymers and copolymers of methacryloyloxyethyl trimethyl ammonium methyl sulfate (METAMS), and quaternary derivatives of starch.

Suitable cationic polymers include polyamines, quaternary derivatives of cellulose ethers, quaternary derivatives of guar, homopolymers and copolymers of at least 20 mole percent dimethyl diallyl ammonium chloride (DMDAAC), homopolymers and copolymers of methacrylamidopropyl trimethyl ammonium chloride (MAPTAC), homopolymers and copolymers of acrylamidopropyl trimethyl ammonium chloride (APTAC), homopolymers and copolymers of methacryloyloxyethyl trimethyl ammponium chloride (METAC), homopolymers and copolymers of acryloyloxyethyl trimethyl ammonium chloride (AETAC), homopolymers and copolymers of methacryloyloxyethyl trimethyl ammonium methyl sulfate (METAMS), and quaternary derivatives of starch.

Suitable anionic polymers include homopolymers and copolymers of acrylic acid (AA), homopolymers and copolymers of methacrylic acid (MAA), homopolymers and copolymers of 2-acrylamido-2-methylpropane sulfonic acid (AMPSA), homopolymers and copolymers of N-methacrylamidopropyl N,N-dimethyl amino acetic acid, N-acrylamidopropyl N,N-dimethyl amino acetic acid, N-methacryloyloxyethyl N,N-dimethyl amino acetic acid, and N-acryloyloxyethyl N,N-dimethyl amino acetic acid.

Anionic surfactants suitable for use with the cationic polymers include alkyl, aryl or alkyl aryl sulfates, alkyl, aryl or alkyl aryl carboxylates or alkyl, aryl or alkyl aryl sulfonates. Preferably, the alkyl moieties have about 1 to about 18 carbons, the aryl moieties have about 6 to about 12 carbons, and the alkyl aryl moieties have about 7 to about 30 carbons. Exemplary groups would be propyl, butyl, hexyl, decyl, dodecyl, phenyl, benzyl and linear or branched alkyl benzene derivatives of the carboxylates, sulfates and sulfonates. , Included are alkyl ether sulphates, alkaryl sulphonates, alkyl succinates, alkyl sulphosuccinates, N-alkoyl sarcosinates, alkyl phosphates, alkyl ether phosphates, alkyl ether carboxylates, alpha-olefin sulphonates and acyl methyl taurates, especially their sodium, magnesium ammonium and mono-, di- and triethanolamine salts. The alkyl and acyl groups generally contain from 8 to 18 carbon atoms and may be unsaturated. The alkyl ether sulphates, alkyl ether phosphates and alkyl ether carboxylates may contain from one to 10 ethylene oxide or propylene oxide units per molecule, and preferably contain 2 to 3 ethylene oxide units per molecule. Examples of suitable anionic surfactants include sodium lauryl sulphate, sodium lauryl ether sulphate, ammonium lauryl sulphosuccinate, ammonium lauryl sulphate,ammonium lauryl ether sulphate, sodium dodecylbenzene sulphonate, triethanolamine dodecylbenzene sulphonate, sodium cocoyl isethionate, sodium lauroyl isethionate, and sodium N-lauryl sarcosinate.

Cationic surfactants suitable for use with the anionic polymers include quaternary ammonium surfactants of the formula X⁻ N⁺R¹R²R³ where R¹, R², and R³ are independently selected from hydrogen, an aliphatic group of from about 1 to about 22 carbon atoms, or aromatic, aryl, an alkoxy, polyoxyalkylene, alkylamido, hydroxyalkyl, or alkylaryl group having from about 1 to about 22 carbon atoms; and X is an anion selected from halogen, acetate, phosphate, nitrate, sulfate, alkylsulfate radicals (e.g., methyl sulfate and ethyl sulfate), tosylate, lactate, citrate, and glycolate. The aliphatic groups may contain, in addition to carbon and hydrogen atoms, ether linkages, and other groups such as hydroxy or amino group substituents (e.g., the alkyl groups can contain polyethylene glycol and polypropylene glycol moieties). The longer chain aliphatic groups, e.g., those of about 12 carbons, or higher, can be saturated or unsaturated. More preferably, R¹ is an alkyl group having from about 12 to about 18 carbon atoms; R² is selected from H or an alkyl group having from about 1 to about 18 carbon atoms; R³ and R⁴ are independently selected from H or an alkyl group having from about 1 to about 3 carbon atoms; and X is as described above.

Suitable hydrophobic alcohols having 6-23 carbon atoms are linear or branched alkyl alcohols of the general formula C_{M}H_{2M+2-N}(OH)_{N}, where M is a number from 6-23, and N is 1 when M is 6-12, but where M is 13-23, N may be a number from 1 to 3. Our most preferred hydrophobic alcohol is lauryl alcohol, but any linear monohydroxy alcohol having 8-15 carbon atoms is also preferable to an alcohol with more or fewer carbon atoms.

By a gel promoter we mean a betaine, a sultaine or hydroxysultaine, or an amine oxide. Examples of betaines include the higher alkyl betaines such as coco dimethyl carboxymethyl betaine, lauryl dimethyl carboxymethyl betaine, lauryl dimethyl alphacarboxyethyl betaine, cetyl dimethyl carboxymethyl betaine, cetyl dimethyl betaine, lauryl bis-(2-hydroxyethyl) carboxymethyl betaine, oleyl dimethyl gamma-carboxypropyl betaine, lauryl bis-(2-hydroxypropyl)alphacarboxyethyl betaine, coco dimethyl sulfopropyl betaine, lauryl dimethyl sulfoethyl betaine, lauryl bis-(2-hydroxyethyl) sulfopropyl betaine, amidobetaines and amidosulfobetaines (wherein the RCONH(CH₂)₃ radical is attached to the nitrogen atom of the betaine, oleyl betaine, and cocamidopropyl betaine. Examples of sultaines and hydroxysultaines include materials such as cocamidopropyl hydroxysultaine.

By a Zeta potential having an absolute value of at least 20 we mean a Zeta potential having a value of +20 of higher or -20 or lower.

Amphoteric surfactants suitable for use with either cationic polymers or anionic polymers include those surfactants broadly described as derivatives of aliphatic secondary and tertiary amines in which the aliphatic radical can be straight or branched chain and wherein one of the aliphatic substituents contains from about 8 to about 18 carbon atoms and one contains an anionic water solubilizing group such as carboxy, sulfonate, sulfate, phosphate, or phosphonate. Suitable amphoteric surfactants include derivatives of aliphatic secondary and tertiary amines in which the aliphatic radical can be straight or branched chain and wherein one of the aliphatic aliphatic substituents contains from about 8 to about 18 carbon atoms and one contains an anionic water solubilizing group, e.g., carboxy, sulfonate, sulfate, phosphate, or phosphonate. Examples of compounds falling within this definition are sodium 3- dodecylaminopropionate, and sodium 3-dodecylaminopropane sulfonate.

Suitable amine oxides include cocoamidopropyl dimethyl amine oxide and other compounds of the formula R¹R²R³N→O wherein R³ is a hydrocarbyl or substituted hydrocarbyl having from about 8 to about 30 carbon atoms, and R¹ and R² are independently hydrogen, a hydrocarbyl or substituted hydrocarbyl having up to 30 carbon atoms. Preferably, R³ is an aliphatic or substituted aliphatic hydrocarbyl having at least about 12 and up to about 24 carbon atoms. More preferably R³ is an aliphatic group having at least about 12 carbon atoms and having up to about 22, and most preferably an aliphatic group having at least about 18 and no more than about 22 carbon atoms.

More particularly, our preferred compositions include aqueous gels comprising water and, by weight based on the water, (a) 0.1% to 5% by weight cationic polymer and (b) 0.01% to 2% by weight of an anionic surfactant, preferably a linear alkyl sulfate having from 8 to 22 carbon atoms, (c) 0.001% to 5%, more preferably 0.001% to 2%, and most preferably 0.001% to 0.5% by weight of a hydrophobic alcohol having from 6 to 23 carbon atoms, and an effective amount of a gel promoter, preferably within those classes of compounds (amphoteric surfactants and amine oxides) described above, the gel having a Zeta Potential absolute value of at least 20 millivolts and, preferably, a viscosity of at least 100 cps (centipoises, or mPa.s) as measured by a Brookfield Viscometer. Our invention also includes a method of making a cationic polymer coacervate comprising forming a solution comprising at least 0.1% of a cationic polymer, adding to the solution at least one anionic surfactant in an amount by weight (a) less than the cationic polymer and (b) effective to obtain an absolute Zeta potential value of at least 20 millivolts and a viscosity of at least 100 cps (centipoises, or mPa.s) as measured by a Brookfield viscometer [Brookfield DVII; LV spindle set #4 @500rpm]; our invention also includes such a gel. The process includes the addition of 0.001% to 5% or more of a hydrophobic alcohol having 6-23 carbon atoms; that is, preferably, a linear or branched alkyl alcohol of the general formula C_{M}H_{2M+2-N}(OH)_{N}, where M is a number from 6-23, and N is 1 when M is 6-12, but where M is 13-23, N may be a number from 1 to 3. Our most preferred hydrophobic alcohol is lauryl alcohol, but any linear monohydroxy alcohol having 8-15 carbon atoms is also preferable to an alcohol with more or fewer carbon atoms.

Where an anionic polymer is used, our compositions include aqueous gels comprising water and, by weight based on the water, (a) 0.1% to 5% anionic polymer and (b) 0.1% to 2% of a cationic surfactant, preferably a quaternary ammonium compound having from 8 to 22 carbon atoms, the gel having a Zeta Potential absolute value of at least 20 millivolts and, preferably, a viscosity of at least 100 cps (centipoises, or mPa.s) as measured by a Brookfield Viscometer (see above for the conditions). Again, most preferably the alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3; the anionic polymer is preferably a homopolymer or copolymer (at least 20% by weight) of AMPSA.

Our invention also includes a method of making an aqueous gel comprising adding to water 0.1% to 5%, based on the water, cationic polymer and a lesser amount but at least 0.01 %, up to 4% or more, of an anionic surfactant having from 8 to 22 carbon atoms, in the presence of a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, preferably in an amount from 0.001% to 5% by weight, the ratio of said cationic polymer to said anionic surfactant being effective to provide a Zeta Potential of at least 20. Preferably the polymer will be a homopolymer.

In addition, our invention includes a method of fracturing a subterranean formation comprising forming a gel or a coacervate as described herein and pumping the gel or coacervate down a wellbore, together with a proppant and under pressure sufficient to fracture the formation. Proppants suitable for our invention include all the generally used or generally accepted proppant materials such as sand, walnut shells, and other hard particulates. The gel may be used in the absence of conventional brine-forming salts. Aqueous based gels used for formation fracturing and other well treatment usually employ guar, cellulose, or gums that depend on chemical bonding and are shear-sensitive. The compositions of our invention can be easily pumped, yet will form strong gels when in use. Our compositions are not only easily pumped, but provide a friction reducing effect. In well drilling, our gel may be used, for example, in concentrations of 0.25% to 1% or more by weight whether or not foam is deliberately generated; for subterranean formation fracturing, somewhat higher concentrations may be desired - for example 0.75% to 1.5% gel or more by weight in the fracturing fluid (which will normally include a proppant) are useful. Our gel compositions are compatible with conventional drilling fluid and fracturing fluid compositions. Gel breakers may be employed with them, and in particular gel breaking may be accomplished by ordinary inorganic salts such as sodium chloride, lithium chloride, magnesium chloride or any other chloride or other salt such as a formate; also by benzoic acid, various bisulfites or polyether glycols ("Carboxax", for example) as is known in the art of gel breaking generally.

In order that the invention may be more fully understood, reference will now be made, by way of example, to the accompanying drawings, in which:
**Figure 1** plots the Zeta Potential of increasing concentrations of cationic polymer in aqueous solution with a constant amount of the anionic surfactant sodium lauryl sulfate.
**Figure 2** shows the effect of pH on Zeta Potential of a combination of cationic polymer and sodium lauryl sulfate at a particular ratio, a basic composition of our invention.
In **Figure 3**, the effect of a wide variance of pH on viscosity is shown as applied to the same basic composition of Figure 3.
**Figure 4** demonstrates the viscosity effects of small amounts of hexanol on a base composition of our invention.
**Figure 5** plots viscosity effects the inclusion of small amounts of octanol in a base composition of our invention.
**Figure 6** plots viscosity effects the inclusion of small amounts of lauryl alcohol in a base composition of our invention.
**Figure 7** shows the viscosity of our composition as a function of increasing concentrations of added betaine.
In **Figure 8****,** an amine oxide was added to the base composition at various low concentrations to determine the effect on viscosity.
**Figures 9** and **10** show the thixotropicity and shear stability of a variation of our composition including three additives: a betaine, an amine oxide, and an alkyl alcohol.
**Figure 11** is a chart showing viscosity in a 1.1% solution of a composition of the invention, notably the "zero shear" viscosity.
**Figure 12** shows foam pipe rheometer results in test pipes (shear stress plotted against shear rate) of a basic gel of our invention at a constant test temperature.
**Figure 13** graphically illustrates the results of a laboratory test of the friction reduction effects of our invention.

Although we prefer to use polymers of diallyl dimethyl ammonium chloride and particularly its homopolymers where cationic polymers are used in our invention, we may use any water soluble cationic polymer effective to viscosify water. Preferably the polymers will have a molecular weight of at least 10,000. Such polymers include homopolymers and copolymers made with cationic monomers (that is, at least 20% of the mer units contain cationic functional groups, while the balance may be nonfunctional or nonionic) such as diallyldimethylammonium chloride, methacrylamidopropyltrimethyl ammonium chloride, acryloyloloxyethyltrimethylammonium chloride, diallyl diethylammonium chloride, methacryloyoloxyethyltrimethyl ammonium chloride, vinyl pyridine, and vinyl benzyltrimethyl ammonium chloride.

The preferred anionic surfactant to be used with the cationic polymer is sodium lauryl sulfate, but any alkali metal alkyl sulfate or sulfonate having 8-22 carbon atoms may be used, and alkyl ether sulfates and sulfonates having 8-22 carbon atoms are included within our term "counterionic surfactant". Commercial forms of sodium lauryl sulfate including minor or even significant amounts of other similar surfactants may be used. Other common anionic surfactants may also be useful.

The alkyl alcohol is preferably a linear alkyl one having from 8 to 22 carbon atoms or, more preferably, 8-15 carbon atoms. Commercial forms of lauryl alcohol having other alcohols as a minor ingredient are satisfactory. We have found that some commercial forms of sodium lauryl sulfate contain lauryl alcohol in amounts sufficient to satisfy the lauryl alcohol requirements of our invention, and accordingly such sodium lauryl sulfates may sometimes be used as the anionic surfactant of our invention together with a cationic polymer, but without additional moieties of lauryl alcohol or other hydrophobic alcohol as described herein. We may substitute sodium lauryl ether sulfate for the sodium lauryl sulfate; lauryl alcohol should be added separately where this substitution is made.

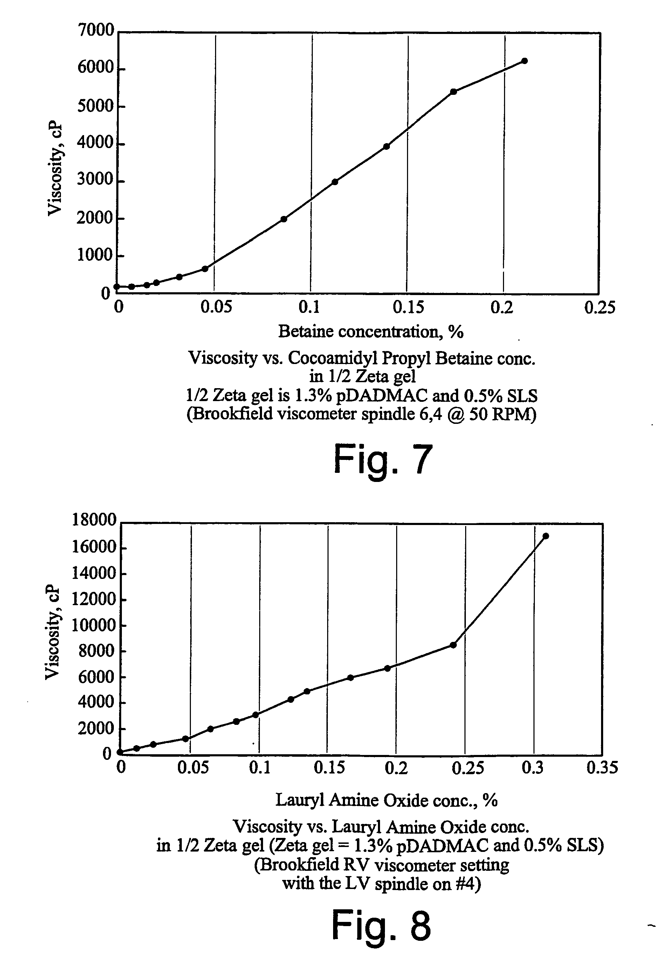

When used, the amine oxide promoter is preferably lauryl amine oxide, but we may use any amine oxide of the formula R¹R²R³NO, preferably R¹N(CH₃)₂O, where R¹ is an alkyl group of 8-22 carbon atoms, and R¹ and R² are independently alkyl groups having from 1 to 4 carbon atoms. We may use any amine oxide of the formula R¹R²R³N→O as defined by Dahayanake et al in US Patent 6,258,859, which is hereby incorporated by reference in its entirety. See also Tillotson US Patent 3,303,896 and Thompson US Patent 4,108,782, which are also incorporated by reference in their entirety for their descriptions of amine oxides. Generally, up to 1% by weight may be used, but as will be seen in Figure 8, concentrations in the range of 0.1% to 0.4% may be quite sufficient for gel promotion.

When used, the amphoteric surfactant is preferably a betaine such as cocamidopropyl betaine, but we may use other types of amphoteric surfactants, including aminopropionate and sultaines. We may use any of the surfactant betaines listed or described by Sake et al in US Patent 6,284,230, which is hereby incorporated by reference in its entirety.

The weight ratio of cationic polymer to alkyl sulfate is generally 10:1 1 to 1.1:1, but the ratio may also be based on the molar ratio of cationic moieties on the polymer and the anionic sites on the surfactant.

Where an anionic polymer is used, we prefer to use a homopolymer of "AMPSA" - acrylamidomethylpropyl sulfonic acid - together with a common quatemery surfactant generally in the same ratios as recited above for cationic polymers and anionic surfactants, provided the absolute value of the Zeta Potential is at least 20. This may be done with or without gel promoters, but whare there are no gel promoters, the concentration of anionic polymer will be significantly higher than where a gel promoter is used.

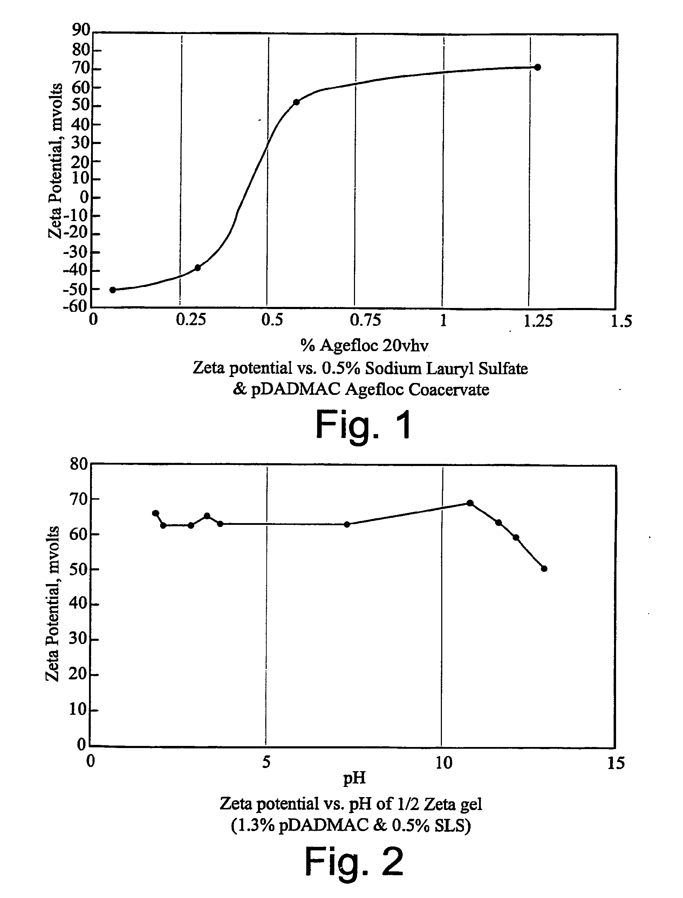

In **Figure 1**, the Zeta potential of combinations of increasing percentages of cationic polymer with 0.5% sodium lauryl sulfate is presented. As is known in the art, where the Zeta potential is 0, there is no stability to the suspension and the materials in question will drop out of an aqueous carrier. As seen in Figure 1, high and low ratios of cationic polymer to anionic surfactant have significant Zeta Potential readings, while the intermediate weight ratios of these particular materials have lower Zeta Potential readings. In Figure 1, the cationic polymer "Agefloc 20vhv" is a homopolymer of dimethyl diallyl ammonium chloride having an average molecular weight of 250,000; a 20% solution of poly diallyl dimethyl ammonium chloride homopolymer ("pDADMAC") was used. A coacervate is formed where the Zeta potential is either higher than +20 millivolts or "lower" than -20 millivolts, i.e. has an absolute value of at least 20. As used herein, the term absolute value means a positive or a negative number; thus a "Zeta Potential having an absolute value of at least 20 millivolts" includes either a positive or a negative value of the measurement in millivolts. While Figure 1 shows the weight percents of the ingredients, the relative charge densities of the polymer and the necessary amount of oppositely charged surfactant are important in determining the Zeta Potential.

**Figure 2** employs a composition, called "Zeta Gel" in this and other figures herein, comprising 1.3% Agefloc20vhv pDADMAC and 0.5% sodium lauryl sulfate, which provided the data point in **Figure 1** at about 68 millivolts. Figure 2 shows that the Zeta Potential of this composition of our invention is not significantly affected through a wide range of pH. For generating the data of Figure 2, potassium hydroxide was used to increase the pH and formic acid was used to decrease it. The term "1/2 Zeta Gel" means the Zeta Gel solution was diluted by 50%, providing a solution actually used of 1.3% cationic polymer and 0.5% anionic surfactant.

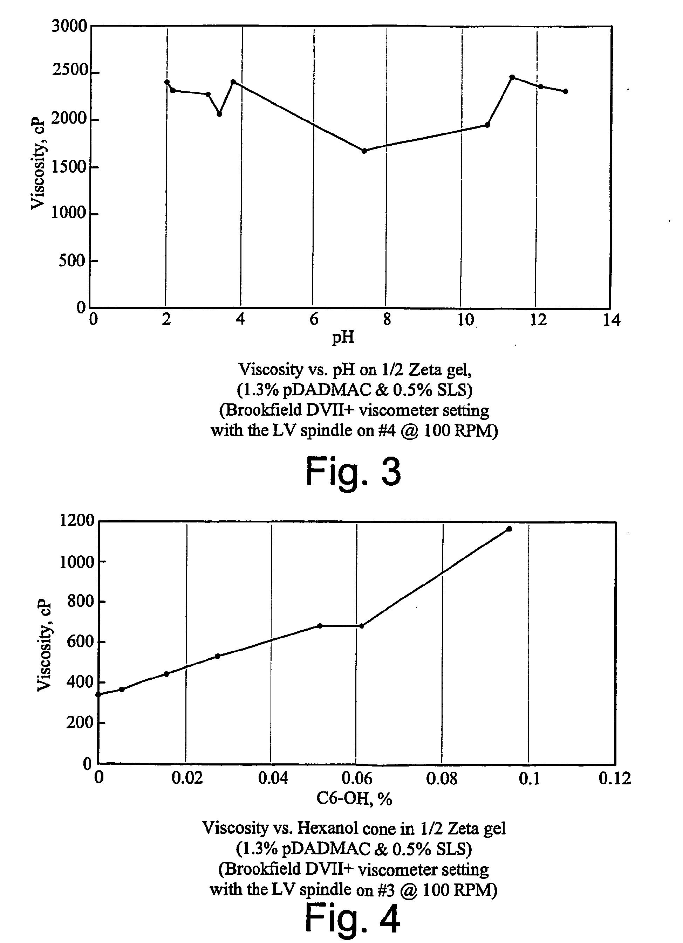

In **Figure 3****,** the pH was varied in a composition similar to that of Figure 2 to determine the effect of pH on viscosity of the composition. While the viscosity is somewhat lower at pH 7 than for higher and lower pH's, it is otherwise not significantly affected by pH.

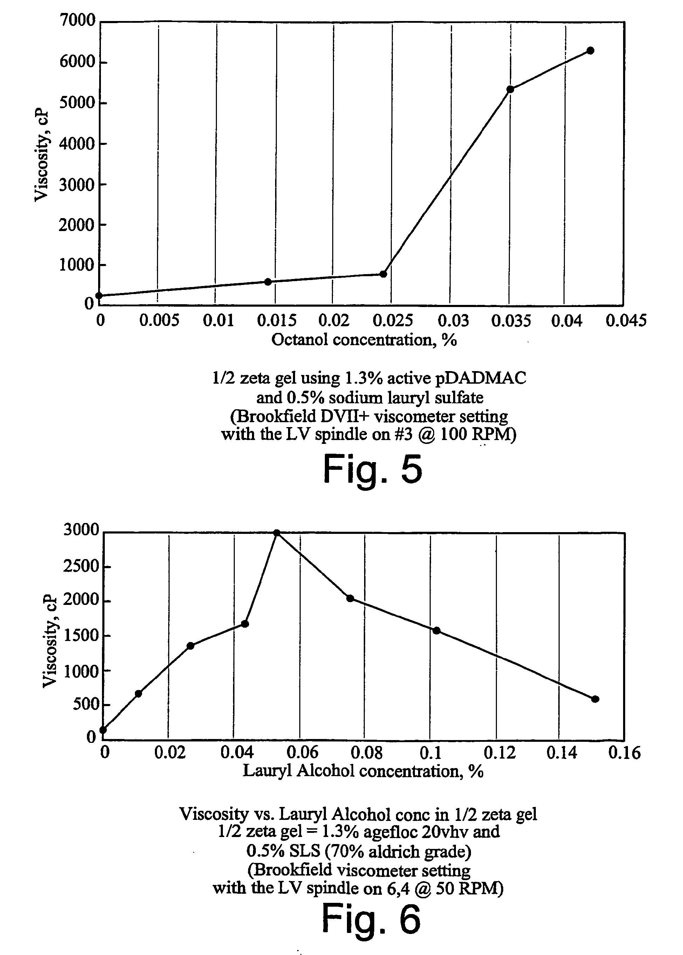

**Figures 4** and **5** are charts showing the viscosity of the composition used in Figures 2 and 3 when hexanol and octanol are used for the hydrophobic alcohol, respectively. For these pDADMAC and sodium lauryl sulfate concentrations and/or for this ratio of the ingredients, it is seen that the viscosities generally increase with increasing concentrations of the alcohol used.

In **Figure 6**, where lauryl alcohol is substituted for the hexanol and octanol of Figures 4 and 5, it is seen that the viscosity increases rapidly with increasing concentration of lauryl alcohol until about 0.05 percent; then decreases with increasing concentration. Persons skilled in the art may realize that this may provide a tool for manipulating the viscosity as required for various purposes.

**Figure 7** is a chart demonstrating that increasing concentration of betaine in the same basic composition of the previous figures will result in increasing viscosities. Similar curves (not shown) were obtained substituting the betaines "Mirataine CAB-A" (cocamidopropyl betaine), "Mirataine BB" (lauramidopropyl betaine), and "Mirataine CBS" (cocamidopropyl hydroxy sultaine) for the betaine of Figure 7.

Likewise, as shown in **Figure 8****,** increasing concentrations of amine oxide will increase the viscosity of the base composition of cationic polymer and a selected smaller percentage of anionic surfactant.

Table 1 below shows the effect on viscosity of certain of our compositions with components in addition to polymer and surfactant.

**Table 1**

| SLS¹ | pDADMAC² | Am Ox³ | Betaine⁴ | Alcohol⁵ | Viscosity⁶ |
|---|---|---|---|---|---|
| 0.50% | 6.5%/1.3% | 0 | 0 | 0 | 200cP |
| 0.25% | 3.25%/0.65% | 0 | 0 | 0 | 20cP |
| 0.25% | 3.25%/0.65% | 0 | 0.35% | 0 | 900cP |
| 0.25% | 3.25%/0.65% | 0 | 0.35% | 0.025% | 3350cP |
| 0.25% | 3.25%/0.65% | 0.30% | 0.35% | 0.025% | 5500cP |

In Table 2, a different source of sodium lauryl sulfate is used for comparison, using all the other ingredients in the same concentrations as Table 1.

**Table 2**

| SLS¹ | pDADMAC² | Am Ox³ | Betaine⁴ | Alcohol⁵ | Viscosity⁶ |
|---|---|---|---|---|---|
| 0.50% | 6.5%/1.3% | 0 | 0 | 0 | 5700cP |
| 0.25% | 3.25%/0.65% | 0 | 0 | 0 | 60cP |
| 0.25% | 3.25%/0.65% | 0 | 0.35% | 0 | 3850cP |
| 0.25% | 3.25%/0.65% | 0 | 0.35% | 0.025% | 5000cP |
| 0.25% | 3.25%/0.65% | 0.30% | 0.35% | 0.025% | 6150cP |

| | | | | | |
|---|---|---|---|---|---|
| Following is a key to the superscripts in Tables 1 and 2: 1. SLS = sodium lauryl sulfate. In Table 1, the SLS was 70% from Aldrich; in Table 2, it was Acmepon 95%. Values in the tables are in terms of pure SLS. 2. pDADMAC is poly(diallyldimethyl ammonium chloride) homopolymer having a average molecular weight of 250,000 in Table 1 and at least 400,000 in Table 2. In each case, it was used as a 20% solution; hence the percentage on the left in each cell of the tables is the amount of solution and the percentage on the right is the amount of neat pDADMAC. 3. Am Ox is a 40% solution of lauryl amine oxide, SHERREX 1770. 4. The betaine used in all cases was cocamidyopropyl betaine. 5. The alcohol was dodecanol, i.e. lauryl alcohol. 6. Viscosity is reported as centipoises (mPa.s) as measured on RTV Brookfield viscometer at 20 rpm using spindle #4 and at ambient temperature. | | | | | |

A comparison of the initial use of the sodium lauryl sulfate, at 0.5% in each case, shows a much higher viscosity achieved by the Acmepon product. We surmise that this is attributable to a higher percentage of lauryl alcohol impurity in the Acmepon product. Persons skilled in the art will perceive that the rest of the data are consistent with this assumption. The compositions including separately added lauryl alcohol yielded significantly higher viscosities than the remainder of those without such a separate addition.

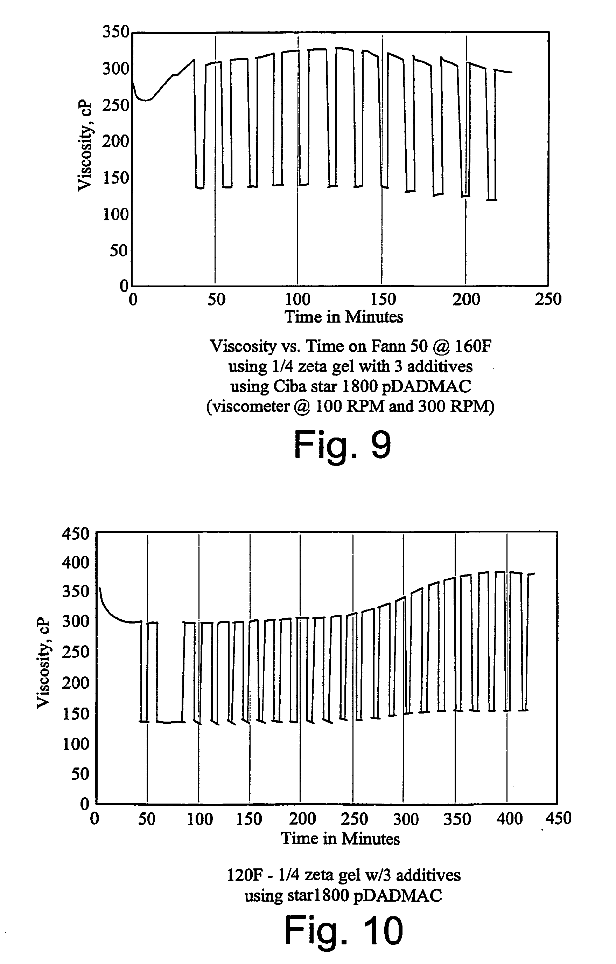

In **Figure 9**, the thermal and shear stability of a multiple ingredient gel of our invention is shown in terms of Fann viscosity. For this data collection, a gel of half the concentration of polymer and surfactant [called "1/4 Zeta Gel" on Figure 9] was used, compared to the charts of Figures 1-8. That is, the pDADMAC was 0.65% by weight (having a molecular weight of 400,000 to 500,000) and the sodium lauryl sulfate was at 0.25%. A 40% solution of amine oxide was used providing a 0.12% concentration, and the betaine was 30% active; the betaine was therefore 0.105% by weight, and the lauryl alcohol was at 0.025%. The "3 additives" are thus the amine oxide, the betaine, and the lauryl alcohol. The Brookfield viscometer was alternately run at 100 rpm (top data series) and 300 rpm (lower data series). As can be seen from the chart, only negligible shear deterioration is evidenced at 160°F (71°C) a period of continuous alternate high and low shear. It is clear that our invention permits the use of quite low concentrations of polymer to achieve excellent viscosities and viscosity stabilities.

**Figure 10** shows similar alternating shear runs on the same composition as Figure 9 using a Fann 50 viscometer, this time at 120°F (49°C). The thixotropic nature of the coacervate gel is demonstrated again.

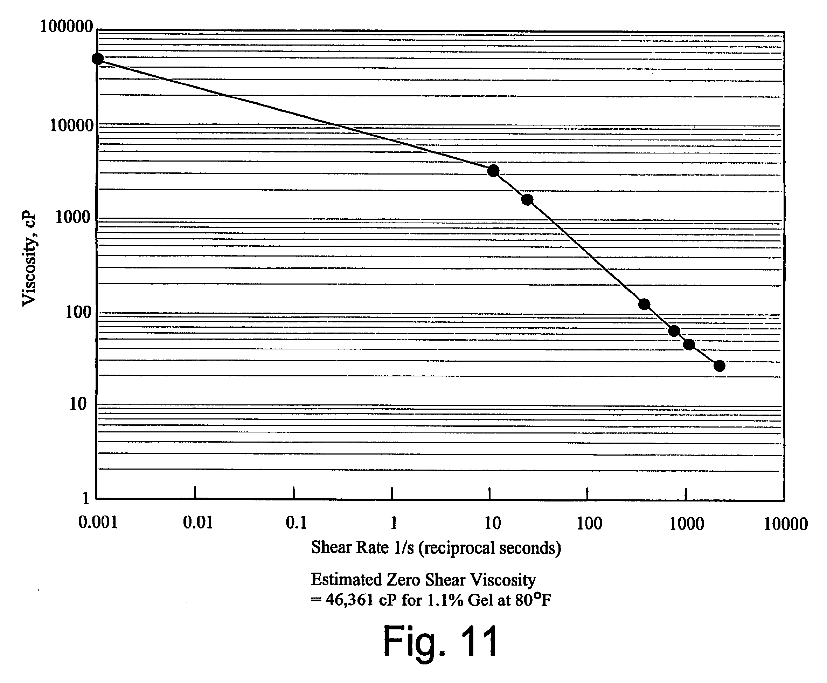

In **Figure 11**, shear rate in reciprocal seconds is plotted against viscosity in centipoises (mPa.s), leading to an extrapolated "zero shear viscosity" of 46,361 cp, an excellent viscosity reading series for a well fracturing fluid. See SPE 73755, "Zero Shear Viscosity Determination of Fracturing Fluids: As Essential Parameter in Proppant Transport Characterizations" by Mahmoud Asadi, SPE, Michael W. Conway, SPE Stim Lab Inc., and Robert D. Barree, SPE, Barree and Associates. **Figure 11** is a nonlinear regression model following the procedure described by Asadi, Conway and Barree particularly with respect to Figures 5, 6, and 7 of that paper. As is known in the well fracturing art, in which a subterranean formation is fractured to facilitate the removal of hydrocarbons, it is necessary for the fluid first to transport the proppant to the fractures and then to suspend it for a useful period of time. The gelled fluid carrying the proppant is subject to wide ranges of shear depending, for example, on proximity to the fracture wall. Then, at rest, as the fractures are typically vertical, a dense, solid, propping agent has a tendency to sink in the fracturing fluid before it can be put to use, unless the fracturing fluid is able to suspend it. Accordingly, a projection of viscosity under zero shear, i.e. in which the fluid is substantially quiescent, provides highly significant information for the technician. In this case, the zero shear results are excellent, while results at other shear rates and temperatures are also excellent for pumpability and proppant transport. An embodiment of the present invention can provide an aqueous gel that comprises no more than 1% water soluble polymer having a zero shear viscosity of at least 45,000 following the zero shear viscosity extrapolation procedure of Asadi, Conway and Barree in SPE 73755.

The zero shear viscosity extrapolation of Figure 11 is reinforced by the results shown in the following tabulations, a rough settling rate test performed on our gel at 1.1% by weight active (the same gel as used for Figures 9, 10 and 11), containing 0.65% polymer). A 100 ml graduated cylinder is filled with a test gel made by mixing 10 ml (weighing 16g) of "20/40" proppant, a common commercial proppant of ceramic spheres, homogeneously dispersed in 100 ml of gel and maintained at 80°F. Settling of the proppant in the cylinder was then observed at the intervals shown, recording the depth of the substantially clear gel from the top of the cylinder.

| | | | | | | | | | | | |
|---|---|---|---|---|---|---|---|---|---|---|---|
| Minutes: | 0 | 10 | 30 | 45 | 60 | 75 | 90 | 110 | 139 | 150 | 180 |
| Mm from top | 0 | 0 | 3.5 | 5 | 7 | 8 | 9.5 | 11 | 14.5 | 16 | 18 |

The result after 60 minutes, 7 millimeters of substantially clear gel, compares quite favorably with the settling rate, for example, of a Diesel gel which exhibited 16 ml of settling after 60 minutes. We refer to the above described settling rate test as a "10/100 20/40" settling rate test, meaning that a 20/40 proppant is used in a volume ratio of proppant to gel of 10/100 in a gel comprising 0.65% polymer. The depth of the upper layer of clear gel after 1 hour of settling provides a good rough comparison. An embodiment of the present invention can provide an aqueous gel that comprises no more than 1% by weight water soluble polymer, preferably no more than 0.7% by weight polymer, characterized by a "10/100 20/40" settling rate result at 60 minutes of no more than 8 millimeters, preferably no more than 7 millimeters.

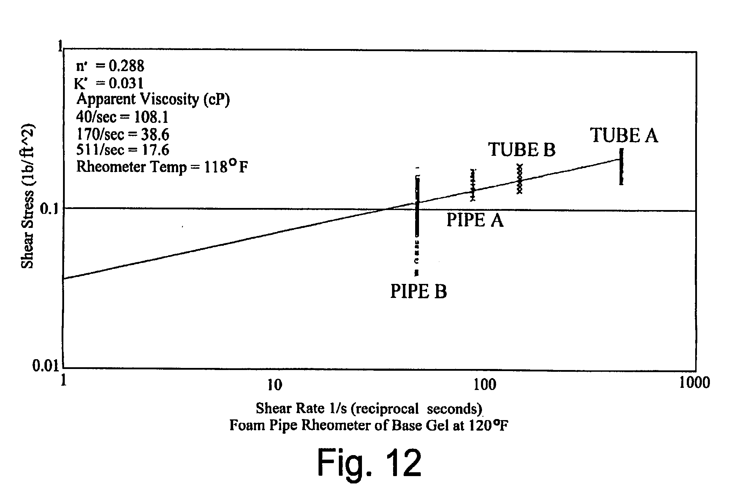

In **Figure 12**, test results are shown for a rheometric test performed on our base gel (1.3% polymer). Prior to testing, the base gel had Fann 35 viscosity readings, at 75°F (24°C) and a pH of 3.05, as follows:

| RPM | Reading |
|---|---|
| 3 | 6 |
| 6 | 8 |
| 100 | 20 |
| 200 | 25 |
| 300 | 30 |
| 600 | 40 |

Standard foam generating surfactants were used to simulate a foam system and nitrogen was used as the gas. The mixture was pumped through sand to generate a standard foam texture and, at 1200 ml/min, routed to each of four conduits designated Tube A, Tube B, Pipe A, and Pipe B. Tube A has an internal diameter of 0.30 inch (0.76 cm) and is 5.29 feet (1.61 m) long; tube B has an I.D of 0.45 inch (1.14 cm) and is 10.53 feet (3.21 m) long, pipe A has an I.D of 0.50 inch (1.27 cm) and is 14.29 inches (36.30 cm) long, and Pipe B has an I.D. of 0.61 inch (1.55 cm) and is 20.45 feet (6.23 m) long. Pressure drops across the lengths of the tubes and pipes are collected, temperatures are measured in the centers of the conduits. Viscosities are calculated and reported in Figure 12. Additional runs conducted with 25, 50, and 75 quality foams (reflecting the amount of nitrogen), revealed excellent half lives.

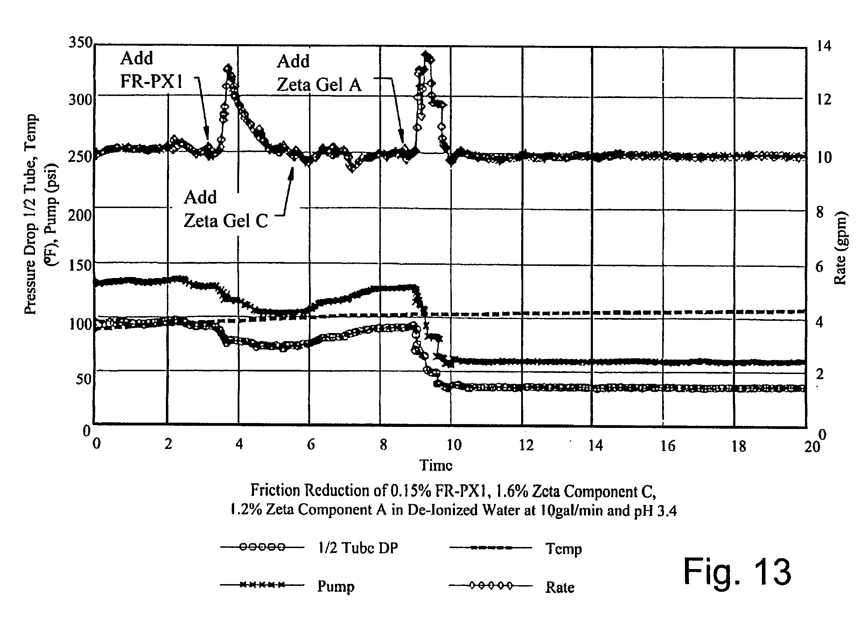

**Figure 13** illustrates the friction reduction effects of the invention. As reviewed above and as is known in the art of formation fracturing in conjunction with well drilling for hydrocarbon recovery, significant savings in energy can be realized by converting the turbulent flow of the formation fracturing fluid through the well bore into laminar flow. Various water-soluble polymers have been used in the past to accomplish the conversion. We have found that the coacervate gel of this invention may be used together with a nonionic polymer to convert the turbulent flow of the fracturing fluid to a substantially laminar flow.

The plots of **Figure 13** were obtained using stainless steel tubing of 0.43 inch (1.09 cm) internal diameter, having a length of 57 feet (17.4 m), and equipped with an appropriate pump and pressure drop sensors. A flow rate of 10 gallons (37.9 L) per minute was established for water over a period of two minutes; then stepwise additions of 0.3% by weight acetic acid, 0.15% FR-PX-1 (a commercial polyethylene oxide polymer), 1.6% by weight of a preferred cationic component of our coacervate gel (polyDADMAC having a molecular weight of about 2,000,000, referred to in the caption as Zeta Component C), and 1.2% by weight of a preferred anionic component of our coacervate gel, sodium lauryl sulfonate, referred to in the caption of Figure 13 as Zeta Component A. At a flow rate of 10 gpm (37.9 Lpm), the Reynolds number for plain water was 73,500, indicating fully turbulent flow. After each addition, the flow rate was re-adjusted to 10 gpm (37.9 Lpm). The temperature increased slightly during the test. From the chart, persons skilled in the art will recognize that on the addition of Component A, there was a dramatic reduction in pressure, indicating an abrupt conversion from turbulent to laminar flow. The pressure achieved, 34.5 psi (237.9 kPa), represents a friction reduction of 64%, which was maintained for an additional ten minutes to the termination of the test.

Our invention thus includes a friction reducing composition comprising a gel component and a nonionic polymer. The gel component is as described herein, and the nonionic polymer is preferably polyethylene oxide, but may be any water soluble polymer (including copolymers such as copolymers of ethylene oxide and propylene oxide) having a molecular weight of at least 1000 and capable of inhibiting turbulent flow in an aqueous fluid in a conduit. Such materials are hereafter called water soluble nonionic friction reducers; we intend to include natural and modified gums such as guar and its nonionic derivatives, hydroxyethyl cellulose and Xanthan gums having the friction reducing properties as well as polypropylene glycols and polyethylene glycols (hereafter called polyalkylene glycols), again having a molecular weight of at least 1000. Our invention also includes a method of conserving energy in subterranean formation fracturing comprising fracturing said subterranean formation using a fracturing fluid comprising (1) a water soluble nonionic friction reducer and (2) an aqueous gel comprising water and, by weight based on the water, (a) 0.1% to 5% of an anionic or cationic polymer, (b) a lesser amount but at least 0.01% of a surfactant having from 8 to 22 carbon atoms and a charge opposite that of said polymer, (c) from 0.001 to 5% of a hydrophobic alcohol, (d) up to 5% of an amphoteric surfactant, and (e) up to 5% of an amine oxide, said gel having a Zeta Potential of an absolute value of at least 20 millivolts). The water soluble nonionic friction reducer (1) may be present in the fracturing fluid or other fluid for which the friction reduction is desired in a concentration from 0.0001% by weight to 1.0% by weight (or more - as much as 5% or more if a friction reducing effect is still manifested); at the same time the gel component (2) is present in amount providing 0.1% to 5% of an anionic or cationic polymer with the other gel components as described herein. Preferably the water soluble nonionic friction reducer is polyethylene oxide of a molecular weight at least 5000, more preferably 10,000. Also preferably the water soluble nonionic friction reducer is present in a concentration of 0.1% to 0.3% by weight. Stated another way, the nonionic water soluble friction reducer is preferably present in a ratio to the anionic or cationic polymer of the gel in a weight ratio of 0.001:1 1 to 5:1. Proppants and other fracturing fluid constituents may be present in desired amounts.

Thus it is seen that our invention includes an aqueous gel comprising water and, by weight based on the water, (a) 0.1 % to 5% of an anionic or cationic polymer, (b) a lesser amount but at least 0.01% of a surfactant having from 8 to 22 carbon atoms and a charge opposite that of said polymer, (c) from 0.001 to 5% of a hydrophobic alcohol, (d) up to 5% of an amphoteric surfactant, and (e) up to 5% of an amine oxide, said gel having a Zeta Potential of an absolute value of at least 20 millivolts. In another aspect, our invention is a method of making an aqueous gel comprising adding to water 0.1% to 5%, by weight based on the water, cationic polymer and a lesser amount but at least 0.01% by weight of an anionic surfactant having from 8 to 22 carbon atoms, in the presence of 0.001% to 5% linear or branched alkyl alcohol of the general formula C_{M}H_{2M+2-N}(OH)_{N}, where M is a number from 6-23, and N is 1 when M is 6-12, but where M is 13-23, N may be a number from 1 to 3, and optionally in the presence of at least one of (a) up to 5% by weight amphoteric surfactant and (b) up to 5% by weight amine oxide, the ratio of the cationic polymer to the anionic surfactant being effective to provide a Zeta Potential having an absolute value of at least 20 millivolts.

## Claims

1. An aqueous gel comprising water and, by weight based on the water, (a) 0.1% to 5% of an anionic or cationic polymer, (b) a lesser amount but at least 0.01% of a surfactant having from 8 to 22 carbon atoms and a charge opposite that of said polymer, (c) up to 5% of an amphoteric surfactant, and (d) up to 5% of an amine oxide, said gel being **characterized by** comprising (e) from 0.001 to 5% of a hydrophobic alcohol, and also **characterized by** having a Zeta Potential of an absolute value of at least 20 millivolts.

2. An aqueous gel of claim 1 wherein said polymer is an anionic polymer comprising at least 20% mer units derived from 2-acrylamido-2-methylpropane sulfonic acid.

3. An aqueous gel of claim 1 or 2 wherein said amphoteric surfactant comprises a betaine or sultaine gel promoter and is present in an amount from 0.001% to 2% by weight.

4. An aqueous gel of claim 3 wherein said amphoteric surfactant comprises cocamidopropyl betaine and is present in an amount from 0.001% to 2% by weight.

5. An aqueous gel of any preceding claim wherein said amine oxide comprises lauryl amine oxide and is present in an amount from 0.001 % to 2% by weight.

6. An aqueous gel of any preceding claim wherein said polymer is a cationic polymer and said hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, said gel including by weight at least one of (a) 0.001% to 5% amine oxide and (b) 0.001 % amphoteric surfactant.

7. An aqueous gel of claim 6 wherein said alkyl alcohol is a linear monohydric alcohol having from 8-15 carbon atoms.

8. An aqueous gel of claim 6 or 7 wherein said alkyl alcohol comprises lauryl alcohol.

9. An aqueous gel of claim 6, 7 or 8 wherein at least 20% of the mer units of said cationic polymer are derived from dimethyl diallyl ammonium chloride.

10. A subterranean fracturing fluid comprising an aqueous gel of claim 6 and a propping agent.

11. A subterranean drilling fluid comprising an aqueous gel of claim 6 and a foam generating gas.

12. A subterranean formation treatment fluid comprising an aqueous gel of claim 6 and a gel breaker.

13. Method of making an aqueous gel comprising adding to water 0.1% to 5%, by weight based on the water, cationic polymer and a lesser amount but at least 0.01% by weight of an anionic surfactant having from 8 to 22 carbon atoms, optionally in the presence of at least one of (a) up to 5% by weight amphoteric surfactant and (b) up to 5% by weight amine oxide, **characterized in that** the adding step is carried out in the presence of 0.001% to 5% linear or branched alkyl alcohol of the general formula C_{M}H_{2M+2-N}(OH)_{N}, where M is a number from 6-23, and N is 1 when M is 6-12, but where M is 13-23, N may be a number from 1 to 3, and also **characterized in that** the ratio of said cationic polymer to said anionic surfactant is effective to provide a Zeta Potential having an absolute value of at least 20 millivolts.

14. Method of claim 13 wherein said cationic polymer comprises a polymer including mer units derived from dimethyl diallyl ammonium chloride.

15. Method of claim 13 or 14 wherein said anionic surfactant comprises sodium lauryl sulfonate.

16. Method of claim 13, 14 or 15 wherein said alkyl alcohol comprises a linear monohydroxy alcohol having from 8 to 14 carbon atoms.

17. An aqueous composition useful for conserving energy in the transportation of aqueous fluids through pipes comprising a gel of claim 1 and, by weight based on water in the composition, at least 0.0001% water soluble nonionic friction reducer.

18. Composition of claim 17 wherein said water soluble nonionic friction reducer is polyethylene oxide.

19. Composition of claim 17 or 18 wherein said hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3.

20. Composition of claim 17, 18 or 19 wherein said polyethylene oxide has a molecular weight of at least 10,000.

21. Composition of claim 17, 18, 19 or 20 wherein said water soluble nonionic friction reducer is a polyalkylene glycol having a molecular weight of at least 1000.

22. Composition of any one of claims 17 to 21 wherein said anionic or cationic polymer (a) is poly (diallyl dimethyl ammonium chloride).

23. Composition of any one of claims 17 to 22 wherein said anionic or cationic polymer (a) is a cationic polymer and said hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3.

24. Composition of any one of claims 17 to 23 wherein said anionic surfactant comprises sodium lauryl sulfonate.

25. Method of conserving energy in the transportation of aqueous fluid through a pipe comprising adding to said aqueous fluid a small amount of a composition of claim 23.

26. Method of claim 25 wherein said pipe is in a well and said aqueous fluid is a fracturing fluid.

27. Method of claim 26 wherein said fracturing fluid includes a proppant.

28. Method of separating two portions of fluid for movement in a pipe comprising placing between said portions of fluid in said pipe an aqueous gel separating pig of claim 1.

29. Method of claim 28 including forming an isolated segment of at least one of said portions of fluid by placing an additional aqueous gel pig in said pipe a desired distance from said separating pig, said additional aqueous gel pig comprising water and, by weight based on the water, (a) 0.1% to 5% of an anionic or cationic polymer, (b) a lesser amount but at least 0.01% of a surfactant having from 8 to 22 carbon atoms and a charge opposite that of said polymer, (c) from 0.001 to 5% of a hydrophobic alcohol, (d) up to 5% of an amphoteric surfactant, and (e) up to 5% of an amine oxide, said gel having a Zeta Potential of an absolute value of at least 20 millivolts.

30. Method of claim 28 wherein at least one of said portions of fluid is a cleaning fluid.

31. Method of claim 28 wherein at least one of said portions of fluid is a drying fluid.

32. Method of claim 28 wherein at least one of said portions of fluid is a well cementing fluid.

33. Method of claim 28 wherein at least one of said portions of fluid is a hydrocarbon fluid.

34. Method of claim 28 wherein one of said portions of fluid is a gas and the other of said portions of fluid is a liquid.

35. Method of claim 28 further including moving said portions of fluid through said pipe.

36. Method of claim 28 wherein said polymer is a cationic polymer and said hydrophobic alcohol is a linear or branched alkyl alcohol of the general formula C_{M}H_{2M+2-N}(OH)_{N}, where M is a number from 6-23, and N is 1 when M is 6-12, but where M is 13-23, N may be a number from 1 to 3, said gel including by weight at least one of (a) 0.001 % to 5% amine oxide and (b) 0.001 % amphoteric surfactant.

37. Method of claim 28 wherein said amine oxide comprises lauryl amine oxide and is present in an amount from 0.001% to 2% by weight.

38. Method of claim 28 further including moving said isolated segment of fluid through said pipe.

## Patentansprüche

1. Wässriges Gel, aufweisend Wasser und, bezogen auf das Gewicht des Wassers, (a) 0,1% bis 5% eines anionischen oder kationischen Polymers, (b) eine geringere Menge und jedoch mindestens 0,01% eines Tensids, das 8 bis 22 Kohlenstoffatome und eine Ladung hat, die der des Polymers entgegengesetzt ist, (c) bis zu 5% eines amphoteren Tensids und (d) bis zu 5% eines Aminoxids; wobei das Gel **dadurch gekennzeichnet ist, dass** es (e) von 0,001% bis 5% eines hydrophoben Alkohols aufweist und außerdem **dadurch gekennzeichnet ist, dass** es ein Zeta-Potential eines absoluten Wertes von mindestens 20 Millivolt hat.

2. Wässriges Gel nach Anspruch 1, wobei das Polymer ein anionischen Polymer ist, das mindestens 20% Monomereinheiten aufweist, die von 2-Acrylamido-2-methylpropansulfonsäure abgeleitet sind.

3. Wässriges Gel nach Anspruch 1 oder 2, wobei das amphotere Tensid einen Betain- oder Sultain-Gelpromotor aufweist und in einer Menge von 0,001% bis 2 Gewichtsprozent vorliegt.

4. Wässriges Gel nach Anspruch 3, wobei das amphotere Tensid Cocamidopropyl-Betain aufweist und in einer Menge von 0,001% bis 2 Gewichtsprozent vorliegt.

5. Wässriges Gel nach einem der vorgenannten Ansprüche, wobei das Aminoxid Laurylaminoxid aufweist und in einer Menge 0,001% bis 2 Gewichtsprozent vorliegt.

6. Wässriges Gel nach einem der vorgenannten Ansprüche, wobei das Polymer ein kationisches Polymer ist und der hydrophobe Alkohol ein geradkettiger oder verzweigter Alkylalkohol der allgemeinen Formel C_{M}H_{2M+2-N}(OH)_{N} ist, worin M eine Zahl von 6 bis 23 ist und N 1 ist, wenn M 6 bis 12 beträgt; wobei jedoch, wenn M 13 bis 23 beträgt, N eine Zahl von 1 bis 3 sein kann; in welches Gel in Gewichtsprozent mindestens einbezogen sind: (a) 0,001% bis 5% Aminoxid und (b) 0,001% amphoteres Tensid.

7. Wässriges Gel nach Anspruch 6, wobei der Alkylalkohol ein geradkettiger einwertiger Alkohol ist, der 8 bis 15 Kohlenstoffatome hat.

8. Wässriges Gel nach Anspruch 6 oder 7, wobei der Alkylalkohol Laurylalkohol aufweist.

9. Wässriges Gel nach Anspruch 6,7 oder 8, wobei mindestens 20% der Monomereinheiten des kationischen Polymers von Dimethylallylammoniumchlorid abgeleitet sind.

10. Unterirdisches Aufbrechfluid, aufweisend ein wässriges Gel nach Anspruch 6 sowie ein Stützmittel.

11. Unterirdisches Bohrfluid, aufweisend ein wässriges Gel nach Anspruch 6 sowie ein schaumerzeugendes Gas.

12. Unterirdisches Formationsbehandlungsfluid, aufweisend ein wässriges Gel nach Anspruch 6 und einen Gelbrecher.

13. Verfahren zum Herstellen eines wässrigen Gels, umfassend die Zugabe zu Wasser, bezogen auf das Gewicht des Wassers, von 0,1% bis 5 Gewichtsprozent kationisches Polymer und eine geringere Menge und jedoch mindestens 0,01% eines anionischen Tensids, das 8 bis 22 Kohlenstoffatome und wahlweise mindestens in Gegenwart einem von (a) bis zu 5 Gewichtsprozent amphoteres Tensid und (b) bis zu 5 Gewichtsprozent Aminoxid; **dadurch gekennzeichnet, dass** der Schritt der Zugabe ausgeführt wird in Gegenwart von 0,001% bis 5% geradkettigem oder verzweigtem Alkylalkohol der allgemeinen Formel C_{M}H_{2M+2-N}(OH)_{N} ist, worin M eine Zahl von 6 bis 23 ist und N 1 ist, wenn M 6 bis 12 beträgt; wobei jedoch, wenn M 13 bis 23 beträgt, N eine Zahl von 1 bis 3 sein kann, und außerdem **dadurch gekennzeichnet ist, dass** das Verhältnis von kationischem Polymer zu anionischem Polymer zu Schaffung eines Zeta-Potentials wirksam ist, das einen absoluten Wert von mindestens 20 Millivolt hat.

14. Verfahren nach Anspruch 13, wobei das kationische Polymer ein Polymer umfasst, in das Monomereinheiten einbezogen sind, die von Dimethylallylammoniumchlorid abgeleitet sind.

15. Verfahren nach Anspruch 13 oder 14, wobei das anionische Tensid Natriumlaurylsulfonat aufweist.

16. Verfahren nach Anspruch 13, 14 oder 15, wobei der Alkylalkohol einen geradkettigen Monohydroxyalkohol aufweist, der 8 bis 14 Kohlenstoffatome hat.

17. Wässrige Zusammensetzung, verwendbar zur Bewahrung von Energie bei der Förderung von wässrigen Fluids durch Rohrleitungen, welche ein Gel nach Anspruch 1 aufweisen sowie, bezogen auf das Gewicht von Wasser in der Zusammensetzung mindestens 0,0001% wasserlöslichen, nichtionischen Reibungsminderer.

18. Zusammensetzung nach Anspruch 17, wobei der wasserlösliche, nichtionische Reibungsminderer Polyethylenoxid ist.

19. Zusammensetzung nach Anspruch 17 oder 18, wobei der hydrophobe Alkohol ein geradkettiger oder verzweigter Alkohol der allgemeinen Formel allgemeinen Formel C_{M}H_{2M+2-N}(OH)_{N} ist, worin M eine Zahl von 6 bis 23 ist und N 1 ist, wenn M 6 bis 12 beträgt; wobei jedoch, wenn M 13 bis 23 beträgt, N eine Zahl von 1 bis 3 sein kann.

20. Zusammensetzung nach Anspruch 17, 18 oder 19, wobei das Polyethylenoxid eine relative Molmasse von mindestens 10000 hat.

21. Zusammensetzung nach Anspruch 17, 18, 19 oder 20, wobei der wasserlösliche, nichtionische Reibungsminderer ein Polyalkylenglykol ist, der eine relative Molmasse von mindestens 1000 hat.

22. Zusammensetzung nach einem der Ansprüche 17 bis 21, wobei das anionische oder kationische Polymer (a) ein Poly(diallyldimethylammoniumchlorid) ist.

23. Zusammensetzung nach einem der Ansprüche 17 bis 22, wobei das anionische oder kationische Polymer (a) ein kationisches Polymer und der hydrophobe Alkohol ein geradkettiger oder verzweigter Alkylalkohol der allgemeinen Formel allgemeinen Formel C_{M}H_{2M+2-N}(OH)_{N} ist, worin M eine Zahl von 6 bis 23 ist und N 1 ist, wenn M 6 bis 12 beträgt; wobei jedoch, wenn M 13 bis 23 beträgt, N eine Zahl von 1 bis 3 sein kann.

24. Zusammensetzung nach einem der Ansprüche 17 bis 23, wobei das anionische Tensid Natriumlaurylsulfonat aufweist.

25. Verfahren zum Bewahren von Energie in der Förderung von wässrigem Fluid durch eine Rohrleitung, umfassend die Zugabe einer geringen Menge einer Zusammensetzung nach Anspruch 23 zu dem wässrigen Fluid.

26. Verfahren nach Anspruch 25, wobei sich die Rohrleitung in einem Bohrloch befindet und das wässrige Fluid ein Aufbrechfluid ist.

27. Verfahren nach Anspruch 26, wobei in das Aufbrechfluid ein Stützmittel einbezogen ist.

28. Verfahren zum Separieren von zwei Teilen von Fluid zur Bewegung in einer Rohrleitung, welches Verfahren das Anordnen eines wässrigen Gels zwischen den Teilen des Fluids in der Rohrleitung umfasst, das den Pig nach Anspruch 1 separiert.

29. Verfahren nach Anspruch 28, einschließend das Erzeugen eines isolierten Segments von mindestens einer der Teile des Fluids, indem in die Rohrleitung ein zusätzliches wässriges Gelpig in einem gewünschten Abstand von dem separierenden Pig angeordnet wird, das zusätzliche wässrige Gelpig Wasser aufweist sowie, bezogen auf das Gewicht des Wassers: (a) 0,1% bis 5% eines anionischen oder kationischen Polymers, (b) eine geringere Menge und jedoch mindestens 0,01% eines Tensids, das 8 bis 22 Kohlenstoffatome und eine Ladung hat, die der des Polymers entgegengesetzt ist, (c) von 0,001 bis 5% eines hydrophoben Alkohols, (d) bis zu 5% eines amphoteren Tensids und (e) bis zu 5% eines Aminoxids, wobei das Gel ein Zeta-Potential eines absoluten Wertes von mindestens 20 Millivolt hat.

30. Verfahren nach Anspruch 28, wobei mindestens einer der Teile des Fluids ein reinigendes Fluid ist.

31. Verfahren nach Anspruch 28, wobei mindestens einer der Teile des Fluids ein trocknendes Fluid ist.

32. Verfahren nach Anspruch 28, wobei mindestens einer der Teile des Fluids ein das Bohrloch zementierendes Fluid ist.

33. Verfahren nach Anspruch 28, wobei mindestens einer der Teile des Fluids ein KohlenwasserstoffFluid ist.

34. Verfahren nach Anspruch 28, wobei einer der Teile des Fluids ein Gas ist und der Teil des Fluids eine Flüssigkeit ist.

35. Verfahren nach Anspruch 28, ferner einschließend das Fördern der Teile des Fluids durch die Rohrleitung.

36. Verfahren nach Anspruch 28, wobei das Polymer ein kationisches Polymer ist und der hydrophobe Alkohol ein geradkettiger oder verzweigter Alkylalkohol der allgemeinen Formel C_{M}H_{2M+2-N}(OH)_{N} ist, worin M eine Zahl von 6 bis 23 ist und N 1 ist, wenn M 6 bis 12 beträgt; wobei jedoch, wenn M 13 bis 23 beträgt, N eine Zahl von 1 bis 3 sein kann; in welches Gel in Gewichtsprozent mindestens einbezogen sind: (a) 0,001% bis 5% Aminoxid und (b) 0,001% amphoteres Tensid.

37. Verfahren nach Anspruch 28, wobei das Aminoxid Laurylaminoxid aufweist und in einer Menge 0,001% bis 2 Gewichtsprozent vorliegt.

38. Verfahren nach Anspruch 28, ferner einschließend das Fördern des isolierten Segments des Fluids durch die Rohrleitung.

## Revendications

1. Gel aqueux comprenant de l'eau et, en poids sur la base de l'eau, (a) de 0,1% à 5% d'un polymère anionique ou cationique, (b) une quantité moindre mais d'au moins 0,01% d'un tensioactif possédant de 8 à 22 atomes de carbone et une charge opposée à celle dudit polymère, (c) jusqu'à 5% d'un tensioactif amphotère, et (d) jusqu'à 5% d'un oxyde d'amine, ledit gel étant **caractérisé par** le fait de comprendre (e) de 0,001 à 5% d'un alcool hydrophobe, et également **caractérisé par** le fait d'avoir un potentiel zêta d'une valeur absolue d'au moins 20 millivolts.

2. Gel aqueux suivant la revendication 1, dans lequel ledit polymère est un polymère anionique comprenant au moins 20% d'unités mères dérivées de l'acide 2-acrylamido-2-méthylpropane sulfonique.

3. Gel aqueux suivant la revendication 1 ou 2, dans lequel ledit tensioactif amphotère comprend un promoteur de gel de bétaïne ou de sultaïne et il est présent dans une quantité de 0,001% à 2% en poids.

4. Gel aqueux suivant la revendication 3, dans lequel ledit tensioactif amphotère comprend la bétaïne de cocamidopropyle et il est présent dans une quantité de 0,001% à 2% en poids.

5. Gel aqueux suivant l'une quelconque des revendications précédentes, dans lequel ledit oxyde d'amine comprend de l'oxyde de laurylamine et il est présent dans une quantité de 0,001% à 2% en poids.

6. Gel aqueux suivant l'une quelconque des revendications précédentes, dans lequel ledit polymère est un polymère cationique et ledit alcool hydrophobe est un alcool d'alkyle linéaire ou ramifié de la formule générale C_{M}H_{2M+2-N}(OH)_{N}, où M est un nombre de 6 à 23, et N est 1 lorsque M est de 6 à 12, mais lorsque M est de 13 à 23, N peut être un nombre de 1 à 3, ledit gel incluant en poids au moins un parmi (a) de 0,001% à 5% d'oxyde d'amine et (b) 0,001% de tensioactif amphotère.

7. Gel aqueux suivant la revendication 6, dans lequel ledit alcool d'alkyle est un alcool monohydrique linéaire possédant 8-15 atomes de carbone.

8. Gel aqueux suivant la revendication 6 ou 7, dans lequel ledit alcool d'alkyle comprend l'alcool de lauryle.

9. Gel aqueux suivant la revendication 6, 7 ou 8, dans lequel au moins 20% des unités mères dudit polymère cationique sont dérivées du chlorure de diméthyldiallylammonium.

10. Fluide de fracturation souterraine comprenant un gel aqueux suivant la revendication 6 et un agent de soutènement.

11. Fluide de forage souterrain comprenant un gel aqueux suivant la revendication 6 et un gaz générant une mousse.

12. Fluide de traitement de formation souterraine comprenant un gel aqueux suivant la revendication 6 et un casseur de gel.

13. Procédé pour la fabrication d'un gel aqueux comprenant l'ajout à de l'eau de 0,1% à 5%, en poids sur la base de l'eau, d'un polymère cationique et d'une quantité moindre mais d'au moins 0,01% en poids d'un tensioactif anionique possédant de 8 à 22 atomes de carbone, éventuellement en présence d'au moins un parmi (a) jusqu'à 5% en poids d'un tensioactif amphotère et (b) jusqu'à 5% en poids d'un oxyde d'amine, **caractérisé en ce que** l'étape d'ajout est réalisée en présence de 0,001% à 5% d'un alcool d'alkyle linéaire ou ramifié de la formule générale C_{M}H_{2M+2-N}(OH)_{N}, où M est un nombre de 6 à 23, et N est 1 lorsque M est de 6 à 12, mais lorsque M est de 13 à 23, N peut être un nombre de 1 à 3, et également **caractérisé en ce que** le rapport dudit polymère cationique sur ledit tensioactif anionique est efficace pour donner un potentiel zêta possédant une valeur absolue d'au moins 20 millivolts.

14. Procédé suivant la revendication 13, dans lequel ledit polymère cationique comprend un polymère incluant des unités mères dérivées du chlorure de diméthyldiallylammonium.

15. Procédé suivant la revendication 13 ou 14, dans lequel ledit tensioactif anionique comprend le sulfonate de lauryle de sodium.

16. Procédé suivant la revendication 13, 14 ou 15, dans lequel ledit alcool d'alkyle comprend un alcool monohydroxy linéaire possédant de 8 à 14 atomes de carbone.

17. Composition aqueuse utile pour une conservation d'énergie dans le transport de fluides aqueux à travers des tuyaux comprenant un gel suivant la revendication 1 et, en poids sur la base de l'eau dans la composition, au moins 0,0001% de réducteur de frottement non ionique soluble dans l'eau.

18. Composition suivant la revendication 17, dans laquelle ledit réducteur de frottement non ionique soluble dans l'eau est un oxyde de polyéthylène.

19. Composition suivant la revendication 17 ou 18, dans laquelle ledit alcool hydrophobe est un alcool d'alkyle linéaire ou ramifié de la formule générale C_{M}H_{2M+2-N}(OH)_{N}, où M est un nombre de 6 à 23, et N est 1 lorsque M est de 6 à 12, mais lorsque M est de 13 à 23, N peut être un nombre de 1 à 3.

20. Composition suivant la revendication 17, 18 ou 19, dans laquelle ledit oxyde de polyéthylène présente un poids moléculaire d'au moins 10000.

21. Composition suivant la revendication 17, 18, 19 ou 20, dans laquelle ledit réducteur de frottement non ionique soluble dans l'eau est un polyalkylèneglycol présentant un poids moléculaire d'au moins 1000.

22. Composition suivant l'une quelconque des revendications 17 à 21, dans laquelle ledit polymère anionique ou cationique (a) est un poly(chlorure de diallyldiméthylammonium).

23. Composition suivant l'une quelconque des revendications 17 à 22, dans laquelle ledit polymère anionique ou cationique (a) est un polymère cationique et ledit alcool hydrophobe est un alcool d'alkyle linéaire ou ramifié de la formule générale C_{M}H_{2M+2-N}(OH)_{N}, où M est un nombre de 6 à 23, et N est 1 lorsque M est de 6 à 12, mais lorsque M est de 13 à 23, N peut être un nombre de 1 à 3.

24. Composition suivant l'une quelconque des revendications 17 à 23, dans laquelle ledit tensioactif anionique comprend le sulfonate de lauryle de sodium.

25. Procédé pour une conservation d'énergie dans le transport d'un fluide aqueux à travers un tuyau comprenant l'ajout audit fluide aqueux d'une petite quantité d'une composition suivant la revendication 23.

26. Procédé suivant la revendication 25, dans lequel ledit tuyau est dans un puits et ledit fluide aqueux est un fluide de fracturation.

27. Procédé suivant la revendication 26, dans lequel ledit fluide de fracturation inclut un agent de soutènement.

28. Procédé pour la séparation de deux portions de fluide pour un mouvement dans un tuyau comprenant le placement entre lesdites portions de fluide dans ledit tuyau d'un racleur de séparation de gel aqueux suivant la revendication 1.

29. Procédé suivant la revendication 28, incluant la formation d'un segment isolé d'au moins une desdites portions de fluide en plaçant un racleur de gel aqueux supplémentaire dans ledit tuyau à une distance désirée depuis ledit racleur de séparation, ledit racleur de gel aqueux supplémentaire comprenant de l'eau et, en poids sur la base de l'eau, (a) de 0,1% à 5% d'un polymère anionique ou cationique, (b) une quantité moindre mais d'au moins 0,01% d'un tensioactif possédant de 8 à 22 atomes de carbone et une charge opposée à celle dudit polymère, (c) de 0,001 à 5% d'un alcool hydrophobe, (d) jusqu'à 5% d'un tensioactif amphotère, et (e) jusqu'à 5% d'un oxyde d'amine, ledit gel présentant un potentiel zêta d'une valeur absolue d'au moins 20 millivolts.

30. Procédé suivant la revendication 28, dans lequel au moins une desdites portions de fluide est un fluide nettoyant.

31. Procédé suivant la revendication 28, dans lequel au moins une desdites portions de fluide est un fluide séchant.

32. Procédé suivant la revendication 28, dans lequel au moins une desdites portions de fluide est un fluide de cimentation de puits.

33. Procédé suivant la revendication 28, dans lequel au moins une desdites portions de fluide est un fluide hydrocarbure.

34. Procédé suivant la revendication 28, dans lequel au moins une desdites portions de fluide est un gaz et l'autre desdites portions de fluide est un liquide.

35. Procédé suivant la revendication 28, incluant en outre le déplacement desdits portions de fluide à travers ledit tuyau.

36. Procédé suivant la revendication 28, dans lequel ledit polymère est un polymère cationique et ledit alcool hydrophobe est un alcool d'alkyle linéaire ou ramifié de la formule générale C_{M}H_{2M+2-N}(OH)_{N}, où M est un nombre de 6 à 23, et N est 1 lorsque M est de 6 à 12, mais lorsque M est de 13 à 23, N peut être un nombre de 1 à 3, ledit gel incluant en poids au moins un parmi (a) de 0,001% à 5% d'oxyde d'amine et (b) 0,001% de tensioactif amphotère.

37. Procédé suivant la revendication 28, dans lequel ledit oxyde d'amine comprend l'oxyde de laurylamine et il est présent dans une quantité de 0,001% à 2% en poids.

38. Procédé suivant la revendication 28, incluant en outre le déplacement dudit segment isolé de fluide à travers ledit tuyau.
